# EUROPÄISCHE PATENTSCHRIFT

(11) **EP 1 787 612 B1**
(45) Veröffentlichungstag und Bekanntmachung des Hinweises auf die Patenterteilung: **14.01.2009**
(21) Anmeldenummer: 06023944.9
(22) Anmeldetag: 17.11.2006
(51) Int. Cl.: A61G 3/06

(54) **Zustiegs- und/oder Zufahrtshilfe mit einer beweglichen Trittplatte und mindestens einem Sensor zur Erfassung von vertikalen und/oder horizontalen, auf die Trittplatte einwirkenden Störkräften**
Boarding and/or access aid comprising a movable step and at least one sensor for measuring vertical and/or horizontal interference forces acting on the step
Aide à l'entrée et/ou l'accès avec un marchepied mobile et au moins un capteur destiné à la détection de forces d'interférence verticales et/ou horizontales agissant sur le marchepied

(30) Priorität: 17.11.2005 DE 102005055684
(43) Veröffentlichungstag der Anmeldung: 23.05.2007
(73) Patentinhaber: Kircher, Werner, 34292 Ahnatal (DE)
(72) Erfinder: Kircher, Werner, 34292 Ahnatal (DE)
(74) Vertreter: Freiherr von Schorlemer, Reinfried

(56) Entgegenhaltungen:
- EP-A- 1 184 025
- DE-A1- 10 351 988

## Beschreibung

Die Erfindung betrifft eine Zustiegs- und/oder Zufahrtshilfe der im Oberbegriff des Anspruchs 1 angegebenen Gattung sowie ein mit einer solchen Zustiegs- und/oder Zufahrtshilfe ausgerüstetes Fahrzeug zur Personenbeförderung.

Zustiegs- und Zufahrtshilfen finden Anwendung bei Fahrzeugen zur Personenbeförderung, beispielsweise bei Bussen und Schienenfahrzeugen des öffentlichen Nahverkehrs. Die Bezeichnung Zustiegs- und Zufahrtshilfen beinhaltet selbstverständlich auch deren Verwendung als Ausstiegs- und Ausfahrtshilfe.

Zustiegs- und Zufahrtshilfen der eingangs bezeichneten Gattung sind in vielfältiger Form bekannt. Sie erleichtern den Ein- und Ausstieg bei Fahrzeugen dadurch, dass im Bereich von Haltestellen an den Fahrzeugen verschiebbar und ggf. auch verschwenkbar gelagerte Trittplatten in Form von Rampen, linearen Tritten od. dgl. ausgefahren werden. Die Trittplatten, die beispielsweise aus Aluminium bestehen und mit einer rutschhemmenden Auflage versehen sind, werden vorzugsweise vor dem Öffnen einer Fahrzeugtür zwischen einem Stand- und Wartebereich für zu befördernde Personen, beispielsweise einem Bahnsteig, und einer Bodenfläche im Einstiegsbereich des Fahrzeugs positioniert, um eventuell zwischen diesen beiden Bereichen bestehende Niveauunterschiede und/oder Spalte auszugleichen oder einfacher passierbar zu machen. Dadurch wird es beispielsweise auch Rollstuhlfahrern und Kinderwagenbenutzem ermöglicht, einfacher ein- bzw. auszusteigen. Nach Beendigung der Aus- und Einstiegsphase und evtl. nach dem Schließen der Fahrtzeugtüren wird die Trittplatte wieder in ihre Ausgangsposition zurückgebracht.

Zur Erfüllung von Sicherheitsauflagen und zur Gewährleistung eines störungsfreien Betriebs der Zustiegs- und Zufahrtshilfen ist es erforderlich, ihre ordnungsgemäße Funktion zu überwachen. Hierzu ist es üblich, auf die Trittplatten wirkende, vertikale und/oder horizontale Kräfte zu erfassen, die beim Aus- und Einfahren der Trittplatten auftreten und im Folgenden als Störkräfte bezeichnet werden. Trifft beispielsweise eine Trittplatte beim Ausfahren auf eine Person oder ein festes Hindernis, was einer horizontalen Störkraft entspricht, dann wird diese Störkraft von einem Sensor erfasst, um ein bestimmtes Ereignis wie z. B. eine Reversion der Ausfahrbewegung der Trittplatte auszulösen und dadurch die Verletzung von Personen und Beschädigungen der Zustiegs- und Zufahrtshilfe bzw. anderer Einrichtungen zu verhindern. Wird eine Trittplatte dagegen während des Aus- oder Einfahrens betreten, was einer vertikalen Störkraft entspricht, dann wird diese Störkraft wiederum von einem Sensor erfasst, um ein anderes bestimmtes Ereignis wie z. B. ein sofortiges Anhalten der Aus- oder Einfahrtsbewegung auszulösen und dadurch wie im zuerst genannten Fall Verletzungen von Personen und Beschädigungen der Zustiegs- und/oder Zufahrtshilfe auszuschließen. Auch zahlreiche andere Ereignisse können beim Ansprechen irgendeiner der Sensoren ausgelöst werden. Insbesondere können dem Fahrer des Fahrzeugs Zustandssignale übermittelt werden, die anzeigen, ob die Aus- bzw. Einfahrtsbewegung ordnungsgemäß abläuft.

Die bisher für die genannten Zwecke allgemein verwendeten Sensoren bestehen beispielsweise aus Näherungsschaltern, mechanisch/elektrisch betätigbaren Schaltern, Trittkontakten (Tastschaltern) oder pneumatisch oder hydraulischen Überdruckschaltern. Da diese Sensoren nur an ganz bestimmten Stellen der Zustiegs- und/oder Zufahrtshilfen sinnvoll angebracht werden können, sind sie aufgrund unvermeidbarer Einflüsse beim Betrieb (z. B. mechanischen Erschütterungen, Schmutz, Feuchtigkeit, Spritzwasser oder Frost) vergleichsweise störanfällig und einem hohen Verschleiß unterworfen. Die Zustiegs- und/oder Zufahrtshilfen sind aus diesem Grund häufig reparaturbedürftig und erfordern eine ständige Wartung.

Es ist daher auch bereits bekannt, Sensoren in Form von Kraftmeßelementen, insbesondere Dehnungsmeßstreifen zu verwenden (DE 103 51 988 A1). Die Erfassung der Störkräfte erfolgt hier dadurch, daß z.B. der Rahmen der Zutritts- und/oder Zufahrtshilfe mittels Elastomerfedern am Fahrzeugboden befestigt und dadurch ermöglichte Kippbewegungen des Rahmens durch Meßfedern und Dehnungsmeßstreifen aufweisende Wägezellen erfaßt werden. Eine derartige Konstruktion setzt jedoch eine bestimmte Montage der Zustiegs- und/oder Zufahrtshilfe am Fahrzeug voraus, was wegen der zahlreichen unterschiedlichen Fahrzeugtypen unbefriedigend ist. Außerdem weisen diese bekannten Zustiegs- und/oder Zufahrtshilfen Dehnungsmeßstreifen auf, die zwischen der verschiebbaren Trittplatte und einem ihr zugeordneten Lenker eines Kurbelantriebs und/oder zwischen einer Kipp- und verschiebbar gelagerten Trittplatte und einem mit dieser gekoppelten Trägerbalken angeordnet sind. Dies bedingt einerseits ebenfalls aufwendige Konstruktionen und hat andererseits den Nachteil, daß die Dehnungsmeßstreifen nur an beweglichen Teilen der Zustiegs- und/oder Zufahrtshilfen befestigt werden können, was die Anwendung aufwendiger Schleppkabel od. dgl. erforderlich macht, um die Dehnungsmeßstreifen mit den erforderlichen Steuereinheiten für den Antrieb zu verbinden. Das erhöht nicht nur die Herstellungskosten, sondern ist auch mit unerwünschtem Verschleiß und dadurch bedingten Störungen verbunden.

Ausgehend davon besteht das von der Erfindung zu lösende technische Problem darin, die Zustiegs- und/oder Zufahrtshilfen der eingangs bezeichneten Gattung kostengünstiger, verschleißärmer und weniger störanfällig auszubilden und an Positionen mit Dehnungsmeßstreifen zu versehen, durch welche die oben genannten Nachteile vermieden werden.

Zur Lösung dieses Problems dienen erfindungsgemäß die Merkmale der Ansprüche 1 und 9.

Die Erfindung bringt den Vorteil mit sich, daß die Dehnungsmeßstreifen nicht nur ausschließlich an der Zustiegs- und/oder Zufahrtshilfe selbst, sondern auch an unbeweglichen Teilen von dieser befestigt sind. Dadurch entfallen alle oben genannten Probleme bekannter Zustiegs- und/oder Zufahrtshilfen. Insbesondere kann die erfindungsgemäße Zustiegs- und/oder Zufahrtshilfe in beliebiger Weise und ohne Rücksicht auf vorhandene Dehnungsmeßstreifen am jeweiligen Fahrzeug befestigt und ohne Schleppkabel od. dgl. betrieben werden. Außerdem beruht die Erfindung auf der Erkenntnis, daß die Zustiegs- und/oder Zufahrtshilfe zwecks Erfassung der Störkräfte mittels Dehnungsmeßstreifen nicht, wie das bisher allgemein angenommen wird, mit zusätzlichen verbiegbaren, federnden oder schwenkbaren Teilen und/oder Lagerungen versehen werden muß, sondern daß hierzu bereits die geringen, von den Störkräften auf die stationären Rahmen- und/oder Antriebsteile ausgeübten Verformungen ausreichen, sofern diese Rahmen- und/oder Antriebsteile in der bei Zustiegs- und/oder Zufahrtshilfen üblichen Weise ausgelegt sind.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische perspektivische Ansicht einer Zustiegs- und/oder Zufahrtshilfe mit einer als Rampe ausgebildeten, teilweise eingefahrenen Trittplatte;
Fig. 2 einen Schnitt etwa längs der Linie II-II der Fig. 1 durch die in einer voll ausgefahrenen Position befindliche Trittplatte;
Fig. 3 einen Schnitt etwa längs der Linie III-III der Fig. 1 durch einen Teil eines Rahmenprofils und eines Rollwagens der Zustiegs- und/oder Zufahrtshilfe;
Fig. 4 in einer stark vergrößerten Einzelheit X der Fig. 1 einen Rollwagen, der in Fig. 1 nur teilweise sichtbar ist;
Fig. 5 in einer stark vergrößerten Einzelheit Y der Fig. 1 eine Stützrollenaufnahme mit einer Stützrolle und der auf der Stützrolle gelagerten Trittplatte, wobei in Fig. 1 die Stützrollenaufnahme und die Stützrolle teilweise verdeckt dargestellt sind;
Fig. 6 in einer stark vergrößerten Einzelheit Z der Fig. 1 Teile einer Antriebseinheit für den Rollwagen nach Fig. 4,
Fig. 7 eine Explosionsdarstellung einer Zustiegs- und/oder Zufahrtshilfe mit einer als linearer Tritt ausgebildeten Trittplatte;
Fig. 8 einen vergrößerten Schnitt etwa längs der Linie VIII-VIII der Fig. 7 durch die Trittplatte;
Fig. 9 in einer stark vergrößeren Einzelheit U der Fig. 7 eine Führung zur verschiebbaren Lagerung der Trittplatte;
Fig. 10 in einer stark vergrößerten Einzelheit V der Fig. 7 ein Rahmenteil mit einer Spannvorrichtung für einen Antriebsriemen;
Fig. 11 in einer stark vergrößerten Einzelheit W der Fig. 7 ein Rahmenteil zur Abstützung einer Abdeckplatte;
Fig. 12 eine der Fig. 7 entsprechende Ansicht der Zustiegs- und/oder Zufahrtshilfe mit an einem Rahmen angebrachten Dehnungsmeßstreifen; und
Fig. 13 einen vergrößerten Querschnitt durch ein Rahmenteil der Fig. 12 mit einem daran befestigten Dehnungsstreifen.

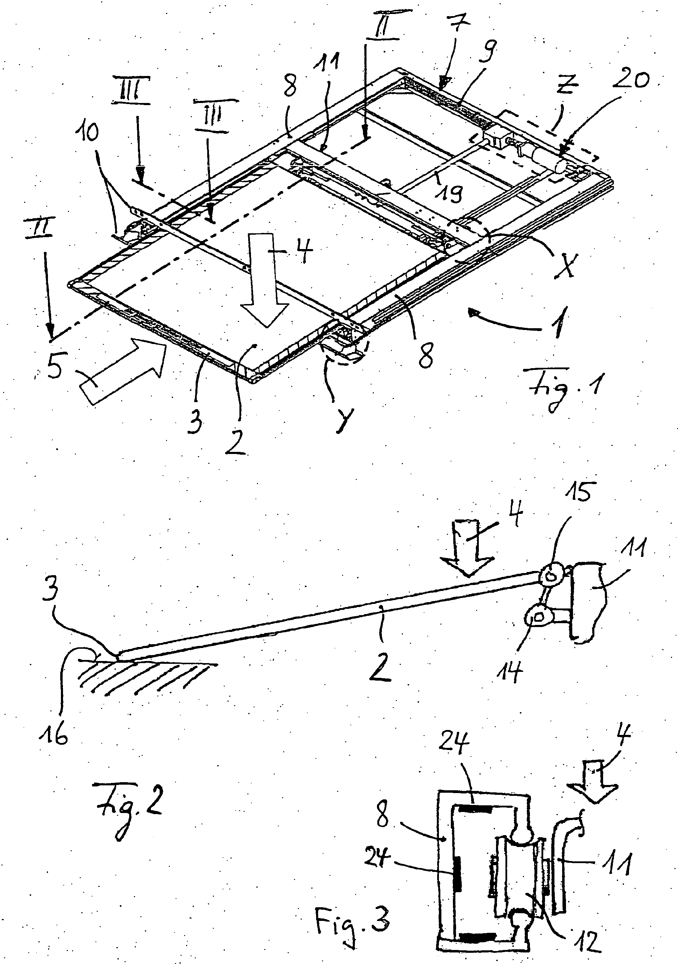

Fig. 1 zeigt eine Zustiegs- und/oder Zufahrtshilfe 1, bei der eine Trittplatte 2 als schwenkbare Rampe an einem Autobus od. dgl. ausgebildet ist. Vertikale und horizontale Störkräfte, die an der Trittplatte 2 angreifen können, wenn sie betreten wird oder mit einer vorderen Stirnfläche 3 gegen ein Hindernis stößt, sind in Form von Pfeilen 4 und 5 angedeutet.

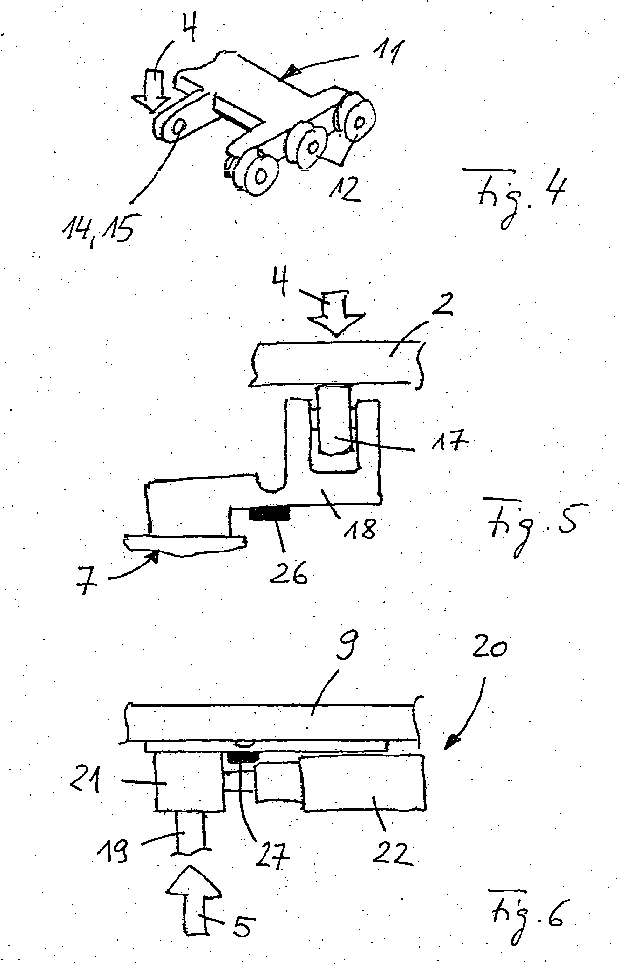

Die Zustiegs- und/oder Zufahrtshilfe 1 nach Fig. 1 weist einen rechteckigen Rahmen 7 mit Längsprofilen 8 auf, die an einem hinteren Ende durch ein Querprofil 9 und an einem vorderen Ende durch zwei parallele Querverstrebungen 10 verbunden sind, zwischen denen ein zum Durchlaß der Trittplatte 2 bestimmter Spalt frei bleibt. Die Längsprofile 8 sind als nach innen offene, U-förmige Führungen ausgebildet, in denen ein Rollwagen 11 (Fig. 3 und 4) mittels Laufrollen 12 verschiebbar geführt ist. An einem Vorderende ist der Rollwagen 11 mittels wenigstens einer Gelenkanordnung 14, 15 an ein Hinterende der Trittplatte 2 gekoppelt. Dadurch kann die Trittplatte 2 einerseits vom Rollwagen 11 in Richtung der Längsprofile 8 vor- und zurückgeschoben werden und andererseits in einer am weitesten vorgeschobenen Stellung (Fig. 2) um eine zu den Querverstrebungen 10 parallele Achse nach unten schwenken, bis sie in der Nähe ihrer vorderen Stirnfläche 3 auf einem Stand- oder Wartebereich 16 für zu befördernde Personen, z. B. einem Bahnsteig, aufliegt (Fig. 2).

Bei den Verschiebebewegungen wird die Trittplatte 2 einerseits in dem Spalt zwischen den Querverstrebungen 10 geführt. Andererseits liegt sie gemäß Fig. 5 im Bereich dieses Spalts auf Stützrollen 17 auf, die an den Enden der beiden Längsprofile 8 in je einer am Rahmen 7 befestigten Stützrollenaufnahme 18 drehbar gelagert sind. Am Ende ihrer Ausfahrtbewegung kann die Trittplatte 2 um die Stützrollen 17 automatisch in die aus Fig. 2 ersichtliche Stellung schwenken. Da die Trittplatte 2 bzw. der Rahmen 7 meistens unterhalb der untersten Stufe oder der Bodenfläche des Fahrzeugs angeordnet ist, wird die Gelenkanordnung 14, 15 in an sich bekannter Weise so ausgebildet, dass beim Verschwenkvorgang gleichzeitig das Hinterende der Trittplatte 2 auf das Niveau dieser untersten Stufe bzw. der Bodenfläche angehoben wird.

Der Rollwagen 11 weist an einem hinteren Ende eine mit einem Innengewinde versehene Buchse bzw. Kupplung auf, in der gemäß Fig. 1 und 6 eine parallel zu den Längsprofilen 8 angeordnete Antriebswelle 19 in Form einer Gewindespindel drehbar gelagert ist. Ein Hinterende der Antriebswelle 19 ist mit einer Antriebseinheit 20 verbunden, die z. B. ein Getriebe 21 und einen Antriebsmotor 22 aufweist, die beide am hinteren Querprofil 9 befestigt sind. Durch Drehen der Antriebswelle 19 wird der Rollwagen 11 und mit ihm die Trittplatte 2 in Richtung der Längsprofile 8 vor- und zurückbewegt.

Zur Überwachung der ordnungsgemäßen Funktion sowie zur Vermeidung der Verletzung von Personen ist erfindungsgemäß wenigstens ein Sensor in Form eines Dehnungsmessstreifens (DMS) vorgesehen. Vorzugsweise sind wenigstens zwei Dehnungsmessstreifen vorhanden, von denen der eine vertikale und der andere horizontale Störkräfte misst.

Die Dehnungsmeßstreifen werden erfindungsgemäß zumindest teilweise an nicht bewegten, stationären Teilen der Zustiegs- und/oder Zufahrtshilfe 1 angebracht. Besonders vorteilhaft ist es, alle zur Ermittlung der horizontalen und vertikalen Störkräfte vorgesehenen Dehnungsmeßstreifen ausschließlich an unbewegten Teilen der Zustiegs- und/oder Zufahrtshilfen anzubringen. Dadurch werden die beiden eingangs genannten Vorteile erzielt, daß zum Anschluß der Dehnungsmeßstreifen an einer elektronische Steuereinheit keinerlei bewegliche elektrische Leitungen in Form von Schleppkabeln od. dgl. benötigt werden und die gesamte Zustiegs- und/oder Zufahrtshilfe als eine komplett vorgefertigte, "autarke" Baueinheit hergestellt werden kann, die für sich selbst und unabhängig davon betriebsfähig ist, an was für einem Fahrzeug sie im Einzelfall befestigt wird und an welcher Stelle des Fahrzeugs und mit welchen Mitteln dies erfolgt. Beispiele hierfür sind nachfolgend angegeben.

Fig. 3 zeigt die Anordnung von Dehnungsmessstreifen 24 an der Innenseite einer U-förmigen Führung der Längsprofile 8. In diesem Fall wird davon ausgegangen, dass die Längsprofile 8 beim Betreten der verschiebbar in ihnen geführten Trittstufe 2 ausreichend gedehnt bzw. gestaucht werden.

Fig. 5 zeigt je einen Dehnungsmessstreifen 26 an der Stützrollenaufnahme 18. Da die Trittplatte 2 auf den Stützrollen 17 aufliegt, wirken sich auf die Trittplatte 2 ausgeübte Störkräfte auch auf die Stützrollenaufnahmen 18 aus, so dass die Dehnungsmessstreifen 26 brauchbare Sensoren für derartige Störkräfte sind.

Schließlich zeigt Fig. 6 beispielhaft, dass wenigstens ein Dehnungsmessstreifen 27 z. B. auch an der Antriebseinheit 20 oder an den mit der Antriebseinheit 20 verbundenen Rahmenteilen, insbesondere z. B. an dem Querprofil 9 angebracht werden kann. Alle diese Teile sind beim Betrieb der Zustiegs- und/oder Zufahrtshilfe 1 starr und unbeweglich am jeweiligen Fahrzeug befestigt, d.h. beim Verschieben der Trittplatte 2 und der zugehörigen Antriebs- und Führungsteile stationär angeordnet.

Die Dehnungsmessstreifen 24 und 26 dienen vorzugsweise zur Anzeige von vertikalen Störkräften (Pfeil 4 in Fig. 1). Dagegen dienen die Dehnungsmessstreifen 27 bevorzugt zur Anzeige von horizontalen Störkräften (Pfeil 5 in Fig. 1). Hierbei wird von dem Umstand Gebrauch gemacht, dass das Anstoßen der vorderen Stirnfläche 3 der Trittplatte 2 gegen ein Hindernis eine entsprechende Rückwirkung auf die Antriebseinheit 20 oder das Querprofil 9 zur Folge hat und diese Teile daher zumindest teilweise gedehnt oder gestaucht werden. Da Dehnungsmessstreifen eine hohe Ansprechempfindlichkeit besitzen, lassen sich in der beispielhaft beschriebenen Weise stets sowohl an den Führungs- und Tragelementen (z. B. 8, 18) als auch an den Antriebselementen (z. B. 20, 9) der Zustiegs- und/oder Zufahrtshilfe 1 Stellen finden, die sich bei Einwirkung auf die Trittplatte 2 in horizontaler oder vertikaler Richtung ausreichend verformen, um die Anwendung von Dehnungsmessstreifen zu ermöglichen.

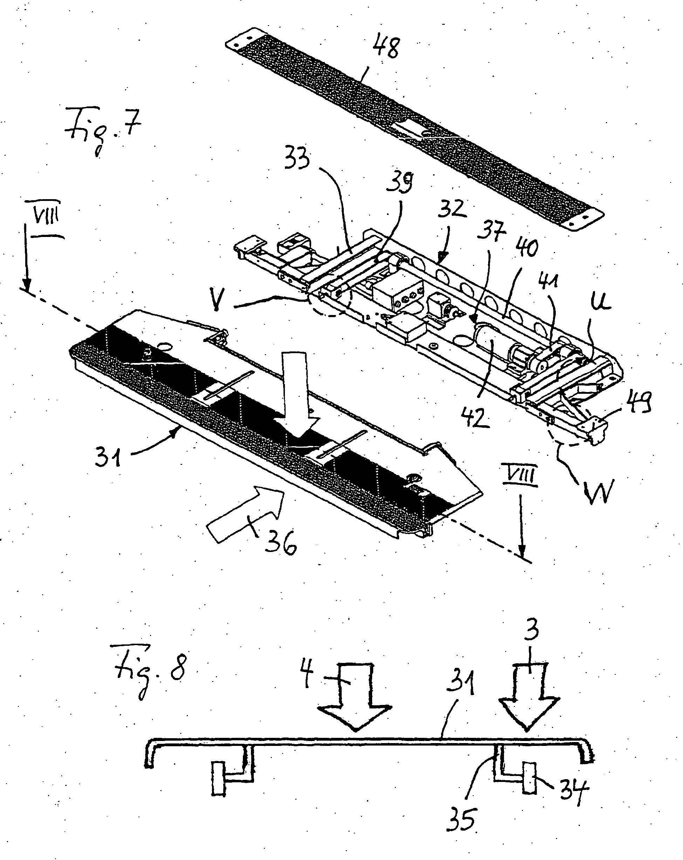

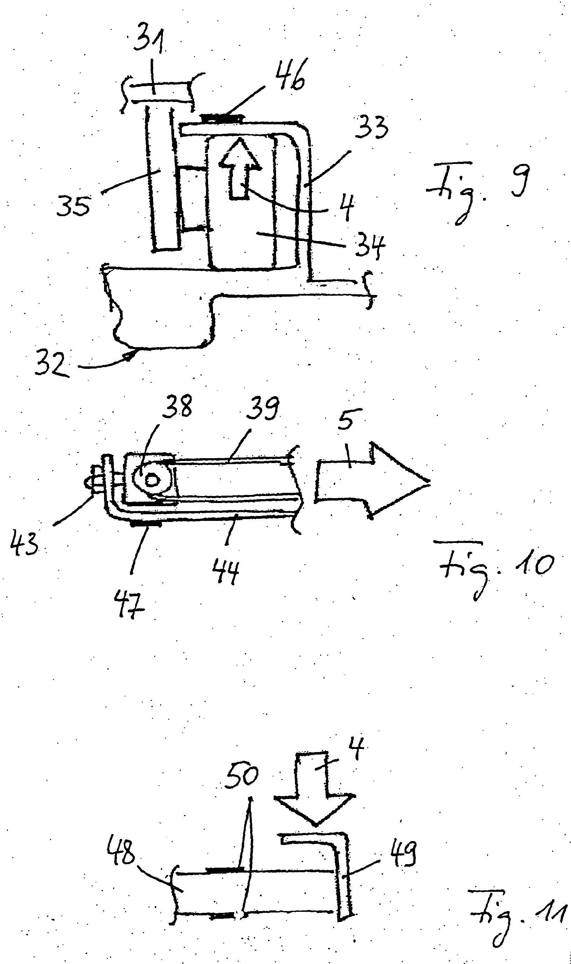

In derselben Weise kann vorgegangen werden, wenn es sich um eine Zustiegs- und/oder Zufahrtshilfe 30 mit einer Trittplatte 31 (Fig. 7) in Form eines linearen Tritts oder Schiebetritts handelt, wie es häufig bei Schienenfahrzeugen der Fall ist. Hierzu ist am Fahrzeug z. B. ein Gehäuse oder Rahmen 32 befestigt, der zwei Längsprofile 33 (Fig. 7 und 9) aufweist, die als nach innen offene, U-förmige Führungen ausgebildet sind. In diesen Führungen bzw. Längsprofilen 33 sind Laufräder 34 (Fig. 8 und 9) angeordnet, die mittels Stützen 35 an der Unterseite der Trittplatte 31 drehbar gelagert sind, so dass die Trittplatte 31 in Richtung eines Pfeils 36 (Fig. 7) horizontal aus dem Rahmen 32 aus- bzw. wieder in diesen eingefahren werden kann.

Zum Antrieb der Trittplatte 31 dient in diesem Fall eine Antriebseinheit 37, die einen auf Zahnrädern 38 (Fig. 10) angeordneten, in Richtung der Verschiebebewegung umlaufend gelagerten Zahnriemen 39 aufweist. Der Zahnriemen 39 und die Trittplatte 31 sind über nicht näher dargestellte, in Eingriff bringbare Kupplungselemente miteinander verbunden. Außerdem wird der Zahnriemen 39 über eine Welle 40 mittels eines zweiten Zahnriemens 41 in Bewegung gesetzt, der von einem Antriebsmotor 42 angetrieben werden kann. Zweckmäßig ist zumindest eines der Zahnräder 38 mittels einer Spannvorrichtung 43 (Fig. 10) an einem mit dem Rahmen 32 verbundenen Rahmenteil 44 befestigt.

Auch bei diesem Ausführungsbeispiel können je nach Bedarf Dehnungsmessstreifen an zahlreichen unterschiedlichen stationären Stellen des Rahmens 32 angebracht werden, um auf die Trittplatte 31 ausgeübte vertikale Kräfte (z. B. Dehnungsmessstreifen 46 in 9) und horizontale Kräfte (z. B. Dehnungsmessstreifen 47 in Fig. 10) zu ermitteln und anzuzeigen. Dabei sind die Dehnungsmessstreifen 46 an der Führung 33 für die Trittplatte 31 und die Dehnungsmessstreifen 47 an einem stationären Teil, hier dem Rahmenteil 44 der Antriebseinheit 37 für die Trittplatte 31 angebracht. Die Anzeige von Störkräften erfolgt daher auch bei diesem Ausführungsbeispiel ohne bewegliche elektrische Leitungen und unabhängig davon, wo und mit welchen Mitteln die Zustiegs- und/oder Zufahrtshilfe 30 am jeweiligen Fahrzeug befestigt wird.

Eine weitere Möglichkeit zur Messung vertikaler Kraftwirkungen ergibt sich aus Fig. 7 und 11. Oftmals ist im Bereich einer Fahrzeugtür unmittelbar über der Trittplatte 31 eine Trittleiste 48 angebracht, die an seitlich neben der Trittplatte 31 vorgesehenen, mit dem Rahmen 32 verbundenen Winkelprofilen 49 befestigt ist. Dehnungsmessstreifen 50 an dieser Trittleiste 48 zeigen beim Betreten durch Personen insbesondere vertikale Störkräfte an.

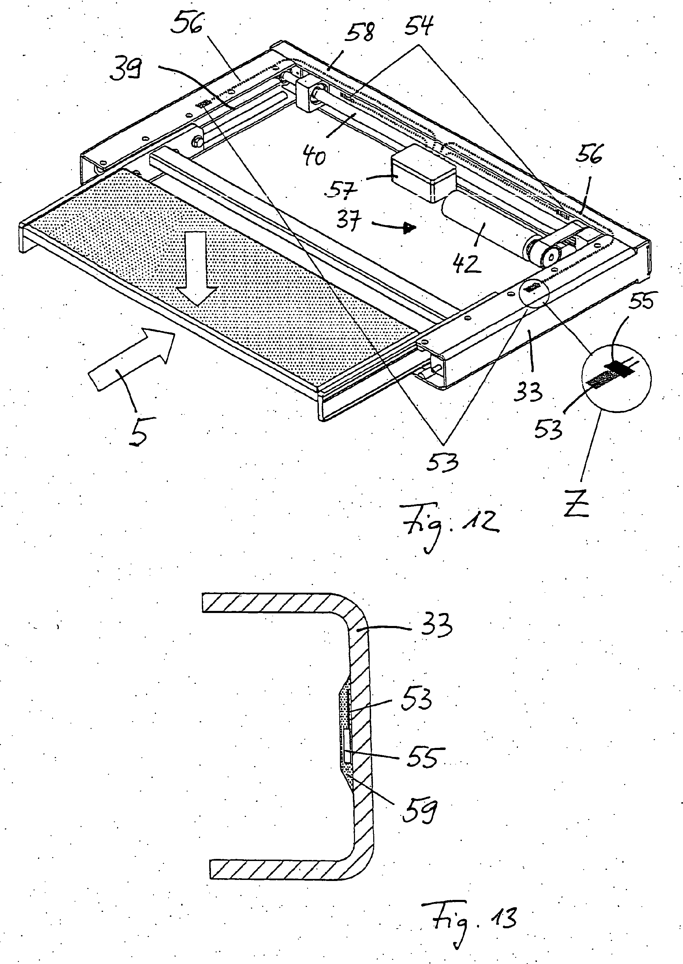

Fig. 12 zeigt eine Zustiegs- und/oder Zufahrtshilfe 52 entsprechend Fig. 7 im zusammengesetzten Zustand, jedoch ohne Abdeckplatte 48. Zusätzlich sind hier zwei Dehnungsmeßstreifen 53 zur Erfassung vertikaler Störkräfte und zwei Dehnungsmeßstreifen 54 zur Erfassung horizontaler Störkräfte angedeutet, die alle am Rahmen 32 befestigt sind. Wie eine Einzelheit Z in Vergrößerung andeutet, sind die Dehnungsmeßstreifen mit besonderem Vorteil mit einem an sie angeschlossenen Verstärker 55 zu einer Baueinheit zusammengefaßt, die als Ganzes z. B. mit einem geeigneten Kleber auf dem betreffenden Rahmen- oder Antriebsteil befestigt wird. Mit dem Bezugszeichen 56 sind längs des Rahmens 32 verlaufende, elektrische Leitungen angedeutet, die sämtlich stationär verlegt werden können und z. B. zu einer Steuereinheit 57 führen, die an einem hinteren Querprofil 58 des Rahmens 32 befestigt ist und dazu dient, die von den Dehnungsmeßstreifen erhaltenen Signale auszuwerten und in entsprechende Steuersignale für die Betätigung der Antriebseinheit 37 umzusetzen.

Da die Dehnungsmeßstreifen bei der erfindungsgemäßen Anwendung nur "0"- und "1"-Signale entsprechend "Störkraft vorhanden" oder "Störkraft nicht vorhanden" abgeben, aber keine analogen, der Größe der jeweiligen Störkraft proportionalen Signale erzeugen müssen, können die zum Nachweis der vorhandenen Störkräfte erforderlichen Verbiegungen der Rahmen- oder Antriebsteile äußerst gering sein.

Die Versorgung der Antriebe 20, 37 und der Steuereinheit und von dort aus der Dehnungsmeßstreifen mit der erforderlichen elektrischen Energie erfolgt vorzugsweise vom jeweiligen Fahrzeug aus durch eine nicht gezeigte Öffnung in einem der Rahmenteile oder der Abdeckung.

Gemäß Fig. 13 werden die Dehnungsmeßstreifen 53 und die mit ihnen verbundenen Verstärker 55 z. B. mittels eines geeigneten Kleb- und Versiegelungsmittels 59 am Rahmenteil 33 befestigt. In entsprechender Weise können die übrigen Dehnungsmeßstreifen befestigt werden.

Die Erfindung ist nicht auf die beschriebenen Ausführungsbeispiele beschränkt, die auf zahlreiche Weise abgewandelt werden können. Insbesondere ist klar, dass die Lagen für mögliche Dehnungsmessstreifen in den Zeichnungen nur beispielhaft angegeben sind. Tatsächlich können sowohl die Anzahlen an Dehnungsmessstreifen als auch die Orte, an denen sie angebracht sind, weitgehend beliebig und in Abhängigkeit vom Einzelfall gewählt werden. In jedem Fall werden dafür Orte gewählt, die sich - wenn auch geringfügig - beim Auftreten von Störkräften in einer zu deren Nachweis mit Dehnungsmessstreifen ausreichenden Weise verbiegen bzw. verformen. Außerdem können einzelne oder mehrere Dehnungsmessstreifen je nach Bedarf als Teile von elektrischen oder elektronischen Auswerte- und/oder Steuerschaltungen vorgesehen und in Brückenschaltungen oder sonstwie miteinander und mit anderen Schaltelementen verbunden werden. Die Ausgestaltung dieser Schaltungen hängt von den im Einzelfall gewünschten Funktionen ab, die beim Ansprechen eines Dehnungsmessstreifens ausgelöst werden sollen. Schließlich versteht sich, dass die verschiedenen Merkmale auch in anderen als den beschriebenen und dargestellten Kombinationen angewendet werden können.

## Patentansprüche

1. Zustiegs- und/oder Zufahrtshilfe für Fahrzeuge zur Personenbeförderung mit einem Rahmen (7, 32), einer beweglich in diesem gelagerten Trittplatte (2, 31), einem Antrieb (20, 37) für die Trittplatte (2, 31) und mindestens einem Dehnungsmeßstreifen (24, 26, 27, 46, 47, 50) zur Erfassung von vertikalen und/oder horizontalen, an der Trittplatte (2, 31) angreifenden Störkräften, **dadurch gekennzeichnet, daß** der Dehnungsmessstreifen (24, 26,27, 46, 47, 50) an einem stationären, jedoch beim Auftreten der Störkräfte ausreichend verbiegbaren Teil des Rahmens (2, 31) und/oder des Antriebs (20, 37) angebracht ist.

2. Zustiegs- und/oder Zufahrtshilfe nach Anspruch 1, **dadurch gekennzeichnet, daß** sie mehrere Dehnungsmeßstreifen (24, 26, 27, 46, 47, 50) zur Erfassung von vertikalen und/oder horizontalen, an der Trittplatte (2, 31) angreifenden Störkräften aufweist und alle diese Dehnungsmeßstreifen (24, 26, 27, 46, 47, 50) an stationären, jedoch beim Auftreten der Störkräfte ausreichend verbiegbaren Teilen des Rahmens (2, 31) und/oder des Antriebs (20, 37) angebracht sind.

3. Zustiegs- und/oder Zufahrtshilfe nach Anspruch 1 oder 2, **dadurch gekennzeichnet, daß** das nicht bewegliche Teil eine Trittleiste (48) ist.

4. Zustiegs- und/oder Zufahrtshilfe nach einem der Ansprüche 1 bis 3, **dadurch gekennzeichnet, daß** sie mindestens eine mit dem Rahmen (7) verbundene Stützrollenaufnahme (18) aufweist und der Dehnungsmeßstreifen (26) an der Stützrollenaufnahme (18) angeordnet ist.

5. Zustiegs- und/oder Zufahrtshilfe nach einem der Ansprüche 1 bis 6, **dadurch gekennzeichnet, daß** der Rahmen (7) wenigstens ein als Führung für die Trittplatte (2, 31) dienendes Profil (8, 33) aufweist und der Dehnungsmessstreifen (24, 46)) an dem Profil (8, 33) angeordnet ist.

6. Zustiegs- und/oder Zufahrtshilfe nach einem der Ansprüche 1 bis 5, **dadurch gekennzeichnet, daß** die Trittplatte (2) als verschiebbare und schwenkbare Rampe ausgebildet ist.

7. Zustiegs- und/oder Zufahrtshilfe nach einem der Ansprüche 3 bis 6, **dadurch gekennzeichnet, daß** der Rahmen (32) mindestens ein Rahmenteil (49) zur Abstützung der Trittleiste (48) aufweist und der Dehnungsmessstreifen (50) an der Trittleiste (48) angeordnet ist.

8. Zustiegs- und/oder Zufahrtshilfe nach einem der Ansprüche 1 bis 7, **dadurch gekennzeichnet, daß** der Antrieb (37) wenigstens einen Antriebsriemen (39) für die Trittplatte (31) aufweist und der Dehnungsmeßstreifen (47) einem den Antriebsriemen (37) lagernden Rahmenteil (44) zugeordnet ist.

9. Fahrzeug zur Personenbeförderung, **dadurch gekennzeichnet, daß** es eine Zustiegs-und Zufahrtshilfe (1, 30) nach wenigstens einem der Ansprüche 1 bis 8 enthält.

## Claims

1. Boarding and/or access aid for vehicles for carrying passengers, comprising a frame (7, 32), a step plate (2, 31) which is mounted movably in said frame, a drive (20, 37) for the step plate (2, 31) and at least one strain gauge (24, 26, 27, 46, 47, 50) for detecting vertical and/or horizontal disruptive forces acting on the step plate (2, 31), **characterised in that** the strain gauge (24, 26, 27, 46, 47, 50) is attached to a part, which is stationary but sufficiently flexible when disruptive forces occur, of the frame (2, 31) and/or of the drive (20, 37).

2. Boarding and/or access aid according to claim 1, **characterised in that** it comprises a plurality of strain gauges (24, 26, 27, 46, 47, 50) for detecting vertical and/or horizontal disruptive forces acting on the step plate (2, 31) and all these strain gauges (24, 26, 27, 46, 47, 50) are attached to parts, which are stationary but sufficiently flexible when disruptive forces occur, of the frame (2, 31) and/or of the drive (20, 37).

3. Boarding and/or access aid according to either claim 1 or claim 2, **characterised in that** the stationary part is a step rail (48).

4. Boarding and/or access aid according to any one of claims 1 to 3, **characterised in that** it comprises at least one support roller retainer (18) which is connected to the frame (7) and the strain gauge (26) is arranged on the support roller retainer (18).

5. Boarding and/or access aid according to any one of claims 1 to 6, **characterised in that** the frame (7) comprises at least one profile (8, 33) which acts as a guide for the step plate (2, 31) and the strain gauge (24, 46) is arranged on the profile (8, 33).

6. Boarding and/or access aid according to any one of claims 1 to 5, **characterised in that** the step plate (2) is formed as a slidable and pivotable ramp.

7. Boarding and/or access aid according to any one of claims 3 to 6, **characterised in that** the frame (32) comprises at least one frame part (49) for supporting the step rail (48) and the strain gauge (50) is arranged on the step rail (48).

8. Boarding and/or access aid according to any one of claims 1 to 7, **characterised in that** the drive (37) comprises at least one drive belt (39) for the step plate (31) and the strain gauge (47) is associated with a frame part (44) supporting the drive belt (37).

9. Vehicle for carrying passengers, **characterised in that** it contains a boarding and/or access aid (1, 30) according to at least one of claims 1 to 8.

## Revendications

1. Aide à l'entrée et/ou à l'accès destinée à des véhicules de transport de personnes, comprenant un cadre (7, 32), un marchepied (2, 31) monté mobile dans ce dernier, un entraînement (20, 37) affecté audit marchepied (2, 31), et au moins une jauge extensométrique (24, 26, 27, 46, 47, 50) conçue pour détecter des forces d'interférence verticales et/ou horizontales appliquées audit marchepied (2, 31), **caractérisée par le fait que** la jauge extensométrique (24, 26, 27, 46, 47, 50) est implantée sur une partie du cadre (7, 32) et/ou de l'entraînement (20, 37) qui est stationnaire, mais est toutefois douée de flexibilité suffisante lors de l'apparition des forces d'interférence.

2. Aide à l'entrée et/ou à l'accès, selon la revendication 1, **caractérisée par le fait qu'**elle englobe plusieurs jauges extensométriques (24, 26, 27, 46, 47, 50) conçues pour détecter des forces d'interférence verticales et/ou horizontales appliquées au marchepied (2, 31), et toutes ces jauges extensométriques (24, 26, 27, 46, 47, 50) sont implantées sur des parties du cadre (7, 32) et/ou de l'entraînement (20, 37) qui sont stationnaires, mais sont toutefois douées de flexibilité suffisante lors de l'apparition des forces d'interférence.

3. Aide à l'entrée et/ou à l'accès, selon la revendication 1 ou 2, **caractérisée par le fait que** la partie non mobile est une latte de déambulation (48).

4. Aide à l'entrée et/ou à l'accès, selon l'une des revendications 1 à 3, **caractérisée par le fait qu'**elle comporte au moins un logement (18) dédié à des galets d'appui et relié au cadre (7), et la jauge extensométrique (26) est située sur ledit logement (18) des galets d'appui.

5. Aide à l'entrée et/ou à l'accès, selon l'une des revendications 1 à 4, **caractérisée par le fait que** le cadre (7) présente au moins un profilé (8, 33) remplissant la fonction d'un guide destiné au marchepied (2, 31), et la jauge extensométrique (24, 46) est située sur ledit profilé (8, 33).

6. Aide à l'entrée et/ou à l'accès, selon l'une des revendications 1 à 5, **caractérisée par le fait que** le marchepied (2) est réalisé sous la forme d'une rampe coulissante et pivotante.

7. Aide à l'entrée et/ou à l'accès, selon l'une des revendications 3 à 6, **caractérisée par le fait que** le cadre (32) est pourvu d'au moins une partie (49) affectée à l'appui de la latte de déambulation (48), et la jauge extensométrique (50) est située sur ladite latte de déambulation (48).

8. Aide à l'entrée et/ou à l'accès, selon l'une des revendications 1 à 7, **caractérisée par le fait que** l'entraînement (37) offre au moins une courroie d'entraînement (39) assignée au marchepied (31), et la jauge extensométrique (47) est associée à une partie (44) du cadre qui assure le montage de ladite courroie d'entraînement (39).

9. Véhicule de transport de personnes, **caractérisé par le fait qu'**il comprend une aide (1, 30) à l'entrée et à l'accès conforme à au moins l'une des revendications 1 à 8.
